# EUROPEAN PATENT SPECIFICATION

(11) **EP 3 199 391 B1**
(45) Date of publication and mention of the grant of the patent: **11.03.2020**
(21) Application number: 17152862.3
(22) Date of filing: 24.01.2017
(51) Int. Cl.: B60H 1/00

(54) **VEHICLE AIR-CONDITIONING APPARATUS**
FAHRZEUGKLIMATISIERUNGSVORRICHTUNG
APPAREIL DE CLIMATISATION D'AIR DE VÉHICULE

(30) Priority: 28.01.2016 JP 2016014462
(43) Date of publication of application: 02.08.2017
(73) Proprietor: Valeo Japan Co., Ltd., Saitama 360-0193 (JP)
(72) Inventor: SHICHIKEN, Yutaka, SAITAMA, 360-0193 (JP)
(74) Representative: Metz, Gaëlle

(56) References cited:
- DE-A1- 10 147 114
- JP-A- 2005 199 871
- JP-A- 2005 199 872
- JP-A- 2008 179 202

## Description

### BACKGROUND OF THE INVENTION

### 1. Field of the Invention

The present invention relates to a vehicle air-conditioning apparatus configured to be mounted on a vehicle or the like and provided with a heat exchanger for heating and an auxiliary heater to be disposed on a downstream side thereof.

### 2. Description of the Related Art

An air-conditioning apparatus mounted on a vehicle may employ a heat exchanger for heating that utilizes engine cooling water or a high-temperature high-pressure refrigerant in many cases. Vehicles manufactured for cold weather regions may be required to have further enhanced heating performance. Therefore, a configuration provided with an auxiliary heater in addition to a heat exchanger for heating is known (For example, Patent Literature 1, JP 2008 179202 or JP 2005 199871) .

Disclosed in Patent Literature 1 is a vehicle air-conditioning apparatus including: a casing having an air flow channel formed in the interior thereof; a heat exchanger for cooling that is disposed in the flow channel to cool down air in the flow channel; a hot-water type heat exchanger for heating that heats the air in the flow channel; an auxiliary heater that heats the air heated by the heat exchanger for heating; and an air mix damper that regulates a ratio between air that proceeds to the heat exchanger for heating and air that bypasses the heat exchanger for heating. The casing includes a wall portion that extends upward from a lower surface of the flow channel between the heat exchanger for cooling and the heat exchanger for heating in order to block rain water entering the casing and water generated by the heat exchanger for cooling from flowing downstream. The flow of the air that has passed through the heat exchanger for cooling becomes uneven (biased) due to the presence of the wall portion, and thus an area where a relatively large volume of air flows (main flow) and an area where a relatively small volume of air flows (branch flow) are formed. The heat exchanger for heating is formed upright in the interior of the casing and heats the main flow and the branch flow. The auxiliary heater is smaller than the heat exchanger for heating in size, and is disposed above a downstream side of the heat exchanger for heating in an area where the main flow passes.

Patent Literature 1 also describes that by disposing the auxiliary heater at the position described above, a large volume of the air (main flow) is directed to the auxiliary heater so that the performance of the auxiliary heater may be used effectively. Patent Literature 1 also describes that flow channel resistance with respect to the main flow is increased to uniformize the distribution of the flow rate of the air flowing in the vicinity of the heat exchanger for heating, so that heating performance of the heat exchanger for heating may be effectively used.

### 3. Patent Literature

PTL 1 : JP-A-2006-001448

### SUMMARY OF THE INVENTION

However, Patent Literature 1 has a problem that since the auxiliary heater is disposed in the area where the entire part of the main flow passes, the flow channel resistance with respect to the main flow is high not only in a case of a full hot mode where outflow air is required to have a high temperature but also in a case of an air mix mode where the outflow air is required to have an intermediate temperature, and thus a sufficient volume of air to be blown out from the air-conditioning apparatus cannot be secured.

It is an object of the invention to provide a vehicle air-conditioning apparatus which ensures high heating performance in a full hot mode, and which ensures a sufficient volume of air to be blown out in an air mix mode.

According to a first aspect of the invention, there is provided a vehicle air-conditioning apparatus according to Claim 1.

Accordingly, in the full hot mode, the opening-and-closing portion closes the controlled area in the outflow surface of the heat exchanger for heating, that is, part of the area where the auxiliary heater is not disposed, so that the air flowing out from the heat exchanger for heating is accelerated to flow into the auxiliary heater and high heating performance is secured. In contrast, in a mode other than the full hot mode, the opening-and-closing portion opens the controlled area in the outflow surface of the heat exchanger for heating, so that the air flowing out from the heat exchanger for heating allows to bypass the auxiliary heater easily and thus an increase in flow channel resistance is suppressed, and a sufficient volume of air to be blown out is secured.

Preferably, the vehicle air-conditioning apparatus (1, 100) of the invention includes: a heat exchanger for cooling (14) disposed on an upstream side of the heat exchanger for heating; and a wall portion (10a) extending upward from a lower surface of the air flow channel between the heat exchanger for cooling and the heat exchanger for heating and biasing the air flow flowed out from the heat exchanger for cooling into a main flow having a relatively large volume of air flow and a branch flow having a relatively small volume of air flow, in which the auxiliary heater (16) and the controlled area (S1) are disposed in a space where the main flow passes (Claim 2). In the full hot mode, the air flowing out from the heat exchanger for heating is further accelerated to flow into the auxiliary heater. In the mode other than the full hot mode, the volume of the air flowing out from the heat exchanger for heating and biasing the auxiliary heater is increased, so that a sufficient volume of air to be blown out may be secured.

Preferably, the vehicle air-conditioning apparatus (1, 100) of the invention includes an air mix damper (17, 217, 317) that regulates a ratio between air that proceeds to the heat exchanger for heating and air that bypasses the heat exchanger for heating, and the opening-and-closing portion is formed integrally with the air mix damper (Claim 3). The air mix damper assumes different positions and postures in the full hot mode and in the mode other than the full hot mode, and since the opening-and-closing portion is formed integrally with the air mix damper, the opening-and-closing portion can be moved without providing a specific mechanism.

The auxiliary heater and the opening-and-closing portion form a labyrinth structure with respect to the air flowing out from the outflow surface when in the full hot mode. In the full hot mode, the air flowing out from the heat exchanger for heating may further be accelerated to flow into the auxiliary heater.

Preferably, when the auxiliary heater (16) is an electric heating heater, the electric heating heater and the opening-and-closing portion do not come into contact with each other (Claim 4). When the auxiliary heater is the electric heating heater, it may be used in a high-temperature state which may accelerate deterioration of resin parts. Therefore, irrespective of whether or not being in a full hot mode, the electric heating heater and the opening-and-closing portion desirably do not come into contact with each other. The opening-and-closing portion may be formed of a material having high heat resistance (for example, a heat-resistant resin or metal) . However, since there arises a problem of increase in production cost, the opening-and-closing portion is preferably formed of normal resin parts (polypropylene, ABS resin, and the like).

It is further disclosed a method of regulating an opening degree of an air flow channel of a vehicle air-conditioning apparatus (1, 100). The vehicle air-conditioning apparatus (1, 100) includes: a casing (10) having an air flow channel in the interior thereof, a heat exchanger for heating (15) that heats air flowing in the air flow channel; an auxiliary heater (16) that is smaller than the heat exchanger for heating and is disposed to face an outflow surface of the heat exchanger for heating from which the heated air flows out; and an opening-and-closing portion (30, 230, 330) that is capable of opening and closing a controlled area (S1) of the outflow surface, which is a part of an area where the auxiliary heater is not disposed. According to the method of regulating an opening degree of the air flow channel, the opening-and-closing portion closes the controlled area to achieve a full hot mode, then opens the controlled area to achieve a mode other than the full hot mode or the opening-and-closing portion opens the controlled area to achieve the mode other than the full hot mode, and then closes the controlled area to achieve the full hot mode.

The invention provides a vehicle air-conditioning apparatus which ensures a high heating performance in the full hot mode, and which ensures a sufficient volume of air to be blown in the air mix mode.

### BRIEF DESCRIPTION OF DRAWINGS

Fig. 1 is a schematic cross-sectional view illustrating a vehicle air-conditioning apparatus of a first example which is not part of the invention;
Fig. 2 is a perspective view of an air mix damper of the first example;
Fig. 3 is an explanatory drawing of a part of a cross section of the vehicle air-conditioning apparatus of the first example, illustrating a flow of air in a full cooling mode;
Fig. 4 is an explanatory drawing of a part of a cross section of the vehicle air-conditioning apparatus of the first example, illustrating a flow of air in an air mix mode;
Fig. 5 is a cross-sectional view taken along the line X-X in Fig. 4 illustrating a part of a structure of the vehicle air-conditioning apparatus of the first example;
Fig. 6 is an explanatory drawing of a part of a cross section of the vehicle air-conditioning apparatus of the first example, illustrating a flow of air in a full hot mode;
Fig. 7 illustrates a part of a cross section of a vehicle air-conditioning apparatus of a second example which is not part of the invention;
Fig. 8 illustrates a part of a cross section of a vehicle air-conditioning apparatus of a third example which is not part of the invention;
Fig. 9 illustrates a part of a cross section of a vehicle air-conditioning apparatus of a first embodiment of the invention;
Fig. 10 illustrates a part of a cross section of a vehicle air-conditioning apparatus of a second embodiment of the invention; and
Fig. 11 is a schematic cross-sectional view illustrating a vehicle air-conditioning apparatus of a fourth example which is not part of the invention.

### DESCRIPTION OF EMBODIMENTS

Referring now to the attached drawings, examples and embodiments of the invention will be described. The invention is not limited to the following embodiments. In the specification and the drawings, components having identical reference signs are the same components. Various modifications may be made for achieving advantageous effects of the invention.

### First example.

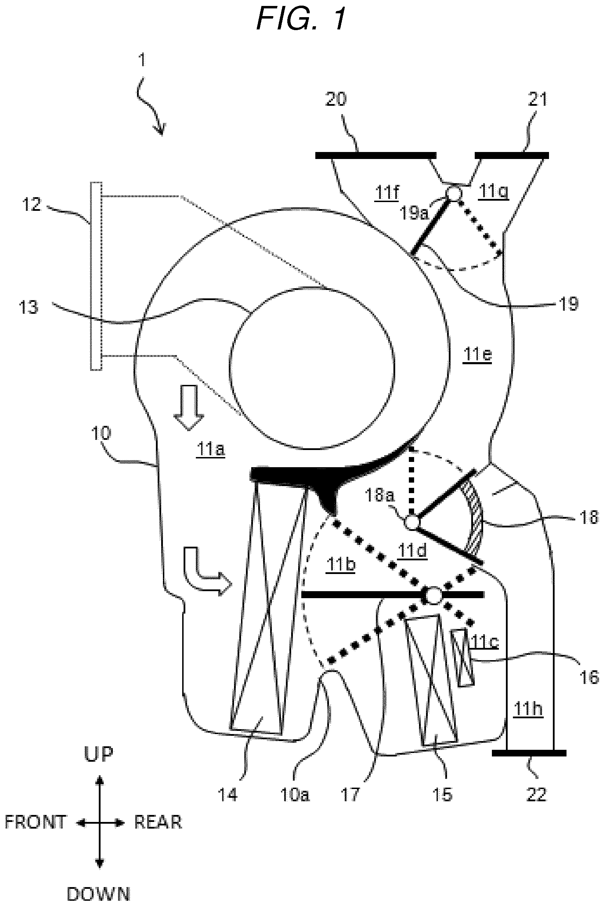

Fig. 1 is a schematic cross-sectional view illustrating a vehicle air-conditioning apparatus of a first example which is not part of the invention. As illustrated in Fig. 1, a vehicle air-conditioning apparatus 1 of the first example includes at least a casing 10 that has an air flow channel 11 (11a to 11h) in the interior thereof, a heat exchanger 15 for heating that heats air flowing in the air flow channel, and an auxiliary heater 16 that is smaller than the heat exchanger 15 for heating in size and is disposed to face an outflow surface of the heat exchanger for heating, from which the heated air flows out. In addition, the vehicle air-conditioning apparatus 1 includes an inside-outside air switching damper (not illustrated), a blower 13, a heat exchanger 14 for cooling, a foot damper 18, and a DEF-VENT switching damper 19.

The casing 10 is formed of a resin material which is manufactured by injection molding, such as polypropylene and an ABS resin. An outside air introduction port 12, an inside air introduction port (not illustrated), a DEF blowout port (20), a VENT blowout port (21), and a FOOT blowout port (22) are provided.

The inside-outside air switching damper (not illustrated) regulates a ratio between the volume of outside air and the volume of inside air from air introduced from the outside air introduction port 12 and/or the inside air introduction port (not illustrated) into the air flow channel 11. Molding resins which can be molded by injection molding such as polypropylene and ABS are preferable in terms of a reduction of production cost and a reduction of product weight. The shape of the inside-outside air switching damper may be of any one of a cantilever type, a butterfly type, a rotary type, and a slide type.

The blower 13 includes a motor (not illustrated), and a multi-blade impeller (not illustrated) mounted on a rotating shaft of the motor. When the rotating shaft of the motor rotates, the multi-blade impeller rotates and blows air introduced from the outside air introduction port 12 and/or the inside air introduction port. The air blown by the multi-blade impeller passes through the air flow channel 11 and is conditioned in temperature, and then is blown out from one or more of the DEF blowout port (20), the VENT blowout port (21), and the FOOT blowout port (22) into a vehicle cabin.

The heat exchanger 14 for cooling is configured as part of a refrigeration cycle as well known. The heat exchanger for cooling is manufactured by brazing aluminum alloy or copper alloy. A low-temperature refrigerant or a heat medium for cooling (for example, cold water) is flowed into the interior of the heat exchanger for cooling, exchanges heat with the air blown by the blower 13, and cools and dehumidifies the air.

The heat exchanger 15 for heating is configured as part of a heating cycle as well known. The heat exchanger for heating is manufactured by brazing aluminum alloy or copper alloy. A high-temperature heat medium (for example, hot water, high-temperature refrigerant) is flowed into the interior thereof, exchanges heat with the air blown by the blower 13, and heats up the air. The vehicle air-conditioning apparatus illustrated in Fig. 1 is capable of heating part or the entire part of the air which is cooled and dehumidified by the heat exchanger 14 for cooling.

The auxiliary heater 16 is a heat exchanger disposed to face the heat exchanger 15 for heating on the downstream side of the heat exchanger 15 for heating in the airflow direction and is capable of heating the air heated by the heat exchanger 15 for heating. The auxiliary heater 16 is smaller than the heat exchanger 15 for heating in size. The term "in size" in this case means the size of the airflow surface area, and the term "smaller in size" means "smaller in airflow surface area". The auxiliary heater 16 may be of any one of a type generating heat by electric power, a type that flows hot water, and a type that flows high-temperature refrigerant.

An air mix damper 17 regulates a ratio between the volume of air that proceeds to the heat exchanger 15 for heating and the volume of air that bypasses the heat exchanger 15 for heating from the air flowed in the air-conditioning apparatus by the blower 13. Molding resins which can be molded by injection molding such as polypropylene and ABS are preferable for a reduction of production cost and a reduction of product weight. The air mix damper 17 illustrated in Fig. 1 is a damper of a so-called butterfly type (a structure having two closing portions extending in substantially opposite directions from the rotating shaft). However, dampers of the cantilevered type, the rotary type, and the slide type may also be employed.

The foot damper 18 is rotationally driven about a rotating shaft 18a to adjust a surface area of the air flow channel 11h through which the air conditioned in temperature proceeds to the FOOT blowout port 22. Molding resins which can be molded by injection molding, such as polypropylene and ABS, are preferable for a reduction of production cost and a reduction of product weight. Although the damper of a so-called rotary type is illustrated in Fig. 1, the dampers of the cantilever type, the butterfly type, and the slide type may also be employed. In the example illustrated in Fig. 1, the foot damper 18 is configured not only to adjust the surface area of the air flow channel 11h, but also to adjust a surface area of the air flow channel 11e that is in communication with the DEF blowout port 20 and/or the VENT blowout port 21.

The DEF-VENT switching damper 19 is rotationally driven about a rotating shaft 19a to adjust surface areas of the air flow channel 11f through which the air conditioned in temperature proceeds to the DEF blowout port 20 and the air flow channel 11g through which the air conditioned in temperature proceeds to the VENT blowout port 21. Molding resins which can be molded by injection molding such as polypropylene and ABS are preferable for a reduction of production cost and a reduction of product weight. Although the damper of a so-called cantilevered type is illustrated in Fig. 1, dampers of any one of the butterfly type, the rotary type, and the slide type may also be employed.

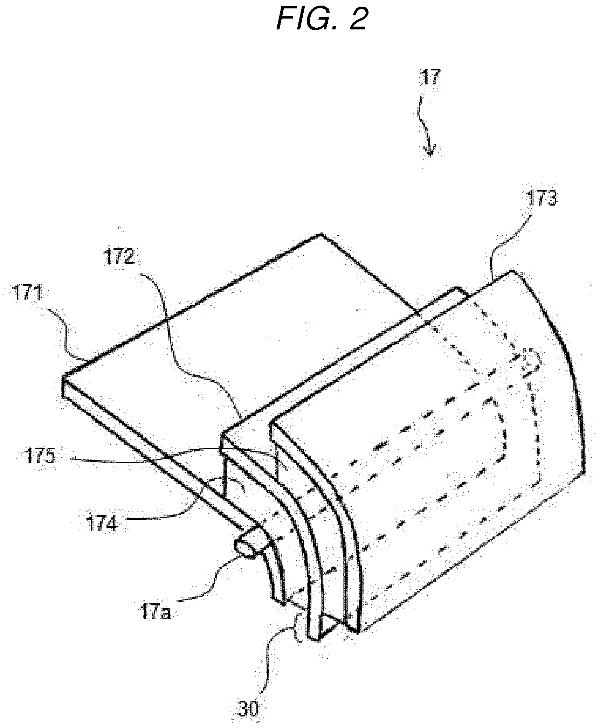

Fig. 2 is a perspective view of the air mix damper 17 according to the first example. The air mix damper 17 of the example includes a rotating shaft 17a and a closing portion 171 that extends in two directions from the rotating shaft 17a. The air mix damper 17 also includes a rectifying portion 172 provided at a distance from the rotating shaft 17a and the closing portion 171, and a rectifying portion 173 provided at a larger distance from the rotating shaft compared with the rectifying portion 172. The closing portion 171 and the rectifying portion 172 are coupled by side plate portions 174. In other words, the closing portion 171, the rectifying portion 172, and the side plate portions 174, 174 define a tunnel-like space. In the same manner, the rectifying portion 172 and the rectifying portion 173 are coupled by side plate portions 175. In other words, the rectifying portion 172, the rectifying portion 173, and the side plate portions 175, 175 define a tunnel-like space.

The air mix damper 17 also provided integrally with an opening-and-closing portion 30 extending continuously from the side plate portions 174, 175 (in Fig. 2, extending downward from the side plate portions 174, 175) at an end of the rectifying portion 172.

In this manner, when the air mix damper 17 is rotated about the rotating shaft 17a, the closing portion 171, the rectifying portion 172, the rectifying portion 173, the side plate portion 174, the side plate portion 175, and the opening-and-closing portion 30 which are formed integrally with the rotating shaft rotate integrally therewith.

Referring now to Fig. 1, Fig. 3, Fig. 4, Fig. 5, and Fig. 6, airflows during temperature conditioning in respective cases will be described.

In accordance with the position of the inside-outside air switching damper (not illustrated), outside air of the vehicle introduced from the outside air introduction port 12 and/or inside air of the vehicle introduced from the inside air introduction port (not illustrated) are blown by the blower 13, flow through the air flow channel 11a, and are cooled and dehumidified by the heat exchanger 14 for cooling as illustrated in Fig. 1.

The cooled and dehumidified air is divided into air proceeding to the heat exchanger 15 for heating and air bypassing the heat exchanger 15 for heating in accordance with the position of the air mix damper 17.

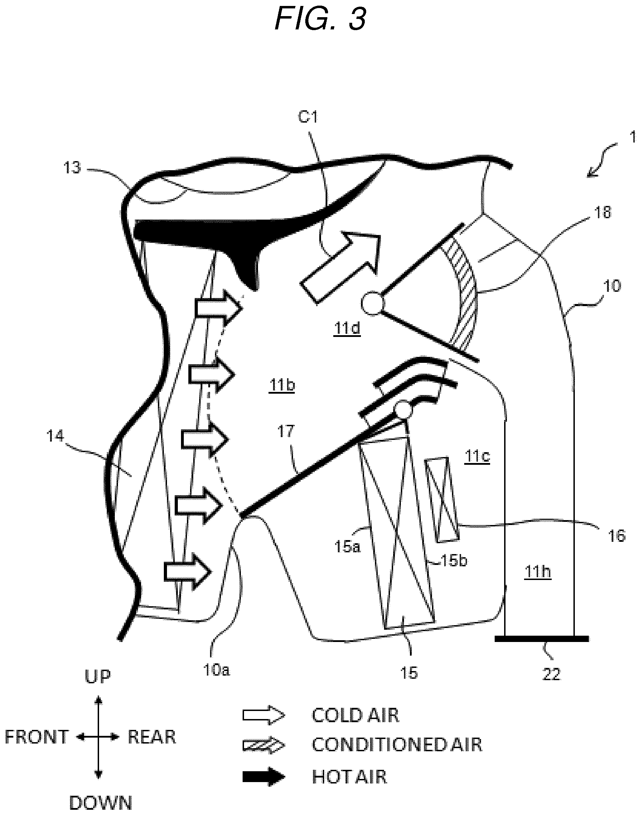

Fig. 3 illustrates an airflow in a full cooling mode. The air mix damper 17 causes the entire part of the cooled and dehumidified air to bypass the heat exchanger 15 for heating, to pass through the cold air passage 11b, and to flow toward the air mix chamber 11d. The foot damper 18 partitions the air mix chamber 11d and the air flow channel 11h proceeding to the FOOT blowout port 22. Accordingly, the air reaching the air mix chamber 11d proceeds to the DEF blowout port 20 and/or the VENT blowout port 21 as cold air C1.

The casing 10 is provided with a wall portion 10a extending upward from below between the heat exchanger 14 for cooling and the heat exchanger 15 for heating. The wall portion 10a contributes to prevent condensed water generating when the heat exchanger 14 for cooling cools down air from flowing out to the heat exchanger 15 for heating or the like.

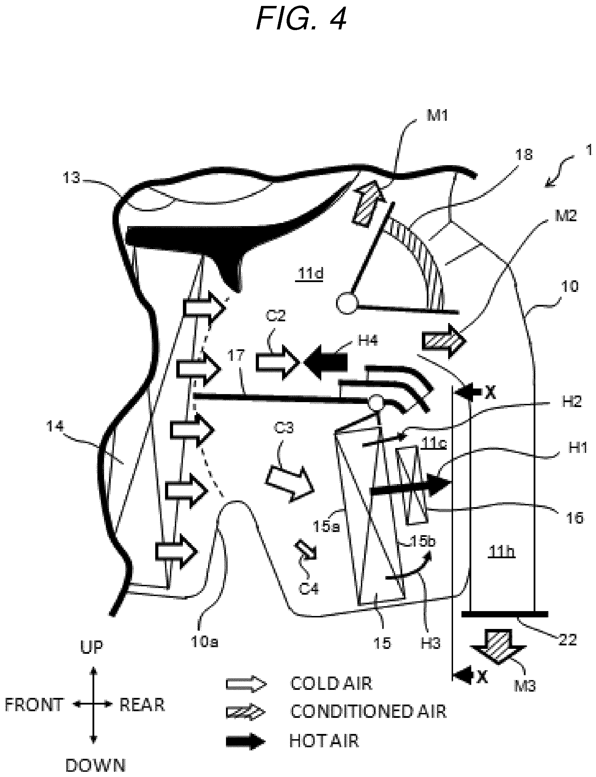

Fig. 4 illustrates an airflow in an air mix mode. The cooled and dehumidified air is divided into cold air C2 bypassing the heat exchanger 15 for heating and cold airs C3 and C4 proceeding to the heat exchanger 15 for heating by the air mix damper 17. The cold air C2 that bypasses the heat exchanger 15 for heating flows into the air mix chamber 11d.

The cold airs C3 and C4 proceeding to the heat exchanger 15 for heating flow from an inflow surface 15a of the heat exchanger 15 for heating, are heated therein, and flow out from an outflow surface 15b as hot air. Since the wall portion 10a of the casing 10 is formed so as to extend upward from below, a flow of the cold air flowed out from the heat exchanger 14 for cooling is biased. Specifically, the cold air C4 (branch flow) that flows downward of a top of the wall portion 10a from the cold air flowing toward the heat exchanger 15 for heating has a smaller volume and a lower velocity than the cold air C3 (main flow) flowing above the top portion.

The hot air flowing out from the outflow surface 15b of the heat exchanger 15 for heating becomes either one of hot air H1 that flows through the auxiliary heater 16 and is heated further by the auxiliary heater 16, hot air H2 that flows above the auxiliary heater 16 and is not heated by the auxiliary heater 16, or hot air H3 that flows below the auxiliary heater 16 and is not heated by the auxiliary heater 16 because of a layout of the heat exchanger 15 for heating and the auxiliary heater 16, which will be described later. In this manner, in the air mix mode, when heating the cold air directed to the heat exchanger 15 for heating by the air mix damper 17, flows of hot air that do not pass through the two heating apparatuses, that is, the heat exchanger 15 for heating and the auxiliary heater 16 (that is, the hot air H2 and the hot air H3) are allowed, so that an increase in ventilation resistance is restrained.

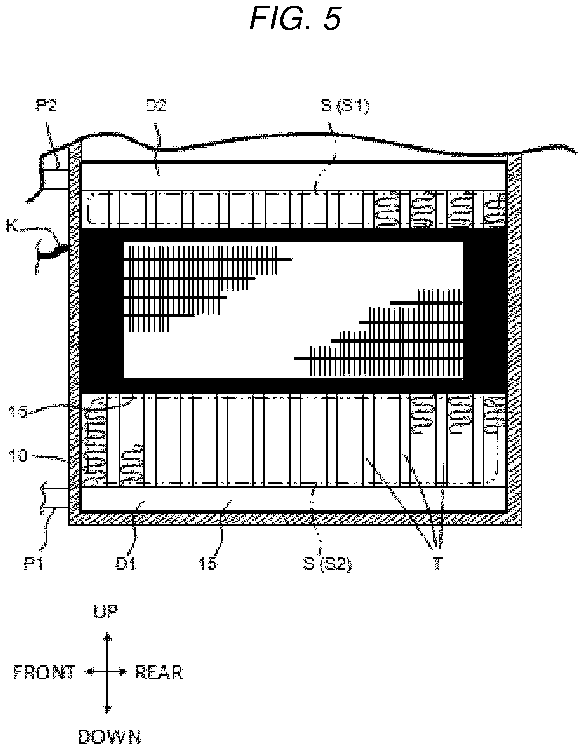

The layout of the heat exchanger 15 for heating and the auxiliary heater 16 will be described with reference to Fig. 5. Fig. 5 is a cross-sectional view taken along the line X-X in Fig. 4 and illustrates part of a structure of the vehicle air-conditioning apparatus of the first example. In other words, Fig. 5 illustrates a configuration of the vehicle air-conditioning apparatus when viewing the front from the air channel 11c.

The casing 10 houses the heat exchanger 15 for heating and the auxiliary heater 16 that is disposed on the downstream side (near side in Fig. 5). The auxiliary heater 16 has a smaller airflow surface area in a vertical direction than that of the heat exchanger 15 for heating and does not cover the entire outflow surface of the heat exchanger 15 for heating. The auxiliary heater 16 is positioned so that the outflow surface 15b of the heat exchanger 15 for heating includes S1 (controlled area) located above the auxiliary heater 16 and S2 located below the auxiliary heater 16 exist as an area S where the auxiliary heater 16 is not disposed (does not cover) . In other words, the auxiliary heater and the controlled area S1 are disposed in a space in which the main flow passes. According to this layout, since the cold air C3 (main flow) having a large volume and a high velocity flows into the upper part of the heat exchanger 15 for heating, the auxiliary heater 16 is not disposed in (does not cover) the area S1 above the auxiliary heater 16 where the air having a relatively high velocity passes, and thus an increase in ventilation resistance is effectively restrained.

Configurations of the heat exchanger 15 for heating and the auxiliary heater 16 of the first example will be described with reference to Fig. 5. The heat exchanger 15 for heating is manufactured by brazing aluminum alloy and copper alloy as described above, and a pipe P1 for introducing hot water and a pipe P2 for draining the hot water are connected thereto. The hot water flowing through the pipe P1 is distributed by a hot water distribution tank D1, flows in a plurality of tubes T upward from below, is concentrated by a hot water distribution tank D2, and flows through the pipe P2. The auxiliary heater 16 exemplified in the first example is an electric heating heater. When power is supplied via electric wiring K, a heating element, which is not illustrated (for example, a PTC element), generates heat, and the heat is transferred to a heat dissipating fin or the like, so that air passing in the vicinity of the heat dissipating fin is heated.

The hot airs H1, H2, and H3 that pass through the heat exchanger 15 for heating and the auxiliary heater 16 respectively join together to form hot air H4 while flowing in the air channel 11c, and flows into the air mix chamber 11d. At this time, since the hot air passes in the interior of a tunnel structure provided in the air mix damper 17, the hot air can be supplied to a desired area in the interior of the air mix chamber 11d without being affected by the cold air C2.

The cold air C2 and the hot air H4 bypassing the heat exchanger 15 for heating are conditioned in temperature in the air mix chamber 11d, and are blown out as needed from at least one of the DEF blowout port 20, the VENT blowout port 21, and the FOOT blowout port 22 depending on the positions of the foot damper 18 and the DEF-VENT switching damper 19. In the case of Fig. 4, conditioned air M1 is blown out from the VENT blowout port 21, and conditioned air M2 flows through the air flow channel 11h and is blown out from the FOOT blowout port 22 as conditioned air M3.

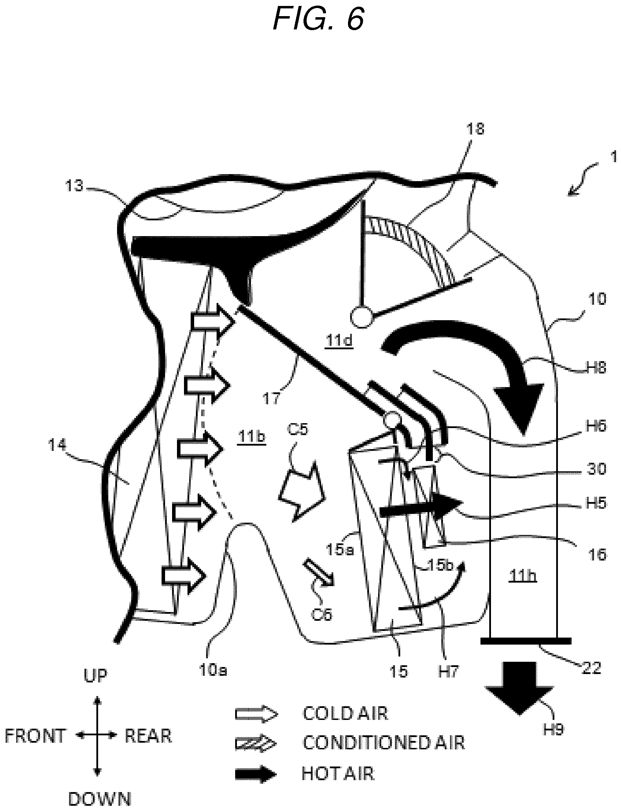

Fig. 6 illustrates an airflow in a full hot mode. The air mix damper 17 blocks between the cold air passage 11b and the air mix chamber 11d, and the entire part of the cooled and dehumidified air flows toward the heat exchanger 15 for heating. Cold air C5 is an airflow flowing above the wall portion 10a and having a relatively large volume and a high velocity. Cold air C6 is an airflow flowing below the wall portion 10a and having a relatively small air volume and a low velocity. Both airs flow from the inflow surface 15a of the heat exchanger 15 for heating, are heated therein, and flow out from the outflow surface 15b as hot air.

Here, hot air H6 flowing through the outflow surface 15b of the heat exchanger for heating in the S1 (controlled area) located above the auxiliary heater 16 is blocked (interrupted) by the opening-and-closing portion 30 formed on the air mix damper 17. Therefore, the hot air H6 cannot flow therethrough and thus flows through the auxiliary heater 16, which further increases the air volume of hot air H5 to be heated by the auxiliary heater 16. In this manner, in the full hot mode, when heating the cold air directed to the heat exchanger 15 for heating by the air mix damper 17, even though a flow of hot air that does not pass through the two heat exchangers for heating (the heat exchanger 15 for heating and the auxiliary heater 16) (that is, hot air H7) is allowed, an air flow corresponding to the cold air C5 having a large volume and a high velocity can be concentrated on the heat exchanger 15 for heating and the auxiliary heater 16, so that a high heating performance may be secured.

As described thus far, according to the first example, a vehicle air-conditioning apparatus capable of securing a high heating performance by concentrating the airflow on the heat exchanger 15 for heating and the auxiliary heater 16 in the full hot mode, and at the same time, capable of securing a sufficient volume of air to be blown by increasing the number of the flow channels which allow hot air to flow therethrough and restraining an increase in ventilation resistance in the air mix mode is provided. It is to be noted that the air mix mode does not necessarily require the hot air to have a high temperature, and thus concentrating a volume of air flowing in the auxiliary heater 16 is not much required. Therefore, restraining the increase in ventilation resistance as in the first example is reasonable.

### Second example

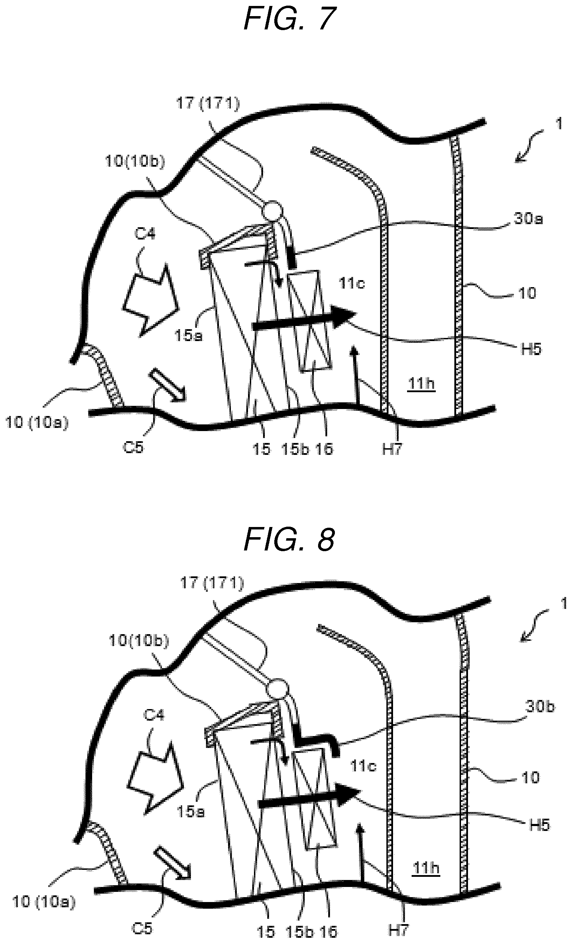

Fig. 7 illustrates a part of a cross section of a vehicle air-conditioning apparatus of a second example which is not part of the invention in the full hot mode. An opening-and-closing portion 30a is preferably formed of a resin member which can be manufactured from polypropylene and an ABS resin by injection molding. Therefore, in the case where the auxiliary heater 16 is of an electric heat-generating type and is increased in temperature to a level which may deteriorate, dissolve and deform the resin, the opening-and-closing portion 30a and the auxiliary heater 16 do not preferably come into contact with each other. Fig. 7 illustrates a state in which the opening-and-closing portion 30a extends toward the auxiliary heater 16 while keeping a clearance therebetween. The ventilation resistance in the S1 (controlled area) above the auxiliary heater 16 may be increased so that the flow of the cold air C4 may be concentrated on the heat exchanger 15 for heating and the auxiliary heater 16. In this manner, even though the opening-and-closing portion 30a closes the controlled area S1 while keeping a clearance, the effect is achieved by increasing the ventilation resistance and substantially closing the controlled area S1.

### Third example

Fig. 8 illustrates a part of a cross section of a vehicle air-conditioning apparatus of a third example which is not part of the invention in the full hot mode. Fig. 8 illustrates a mode in which an opening-and-closing portion 30b has a shape corresponding to the contour of the auxiliary heater 16 while keeping a clearance with respect to the auxiliary heater 16 and having a longer clearance. The ventilation resistance of the S1 (controlled area) located above the auxiliary heater 16 may further be increased, so that the flow of the cold air C4 may be concentrated on the heat exchanger 15 for heating and the auxiliary heater 16.

### First Embodiment

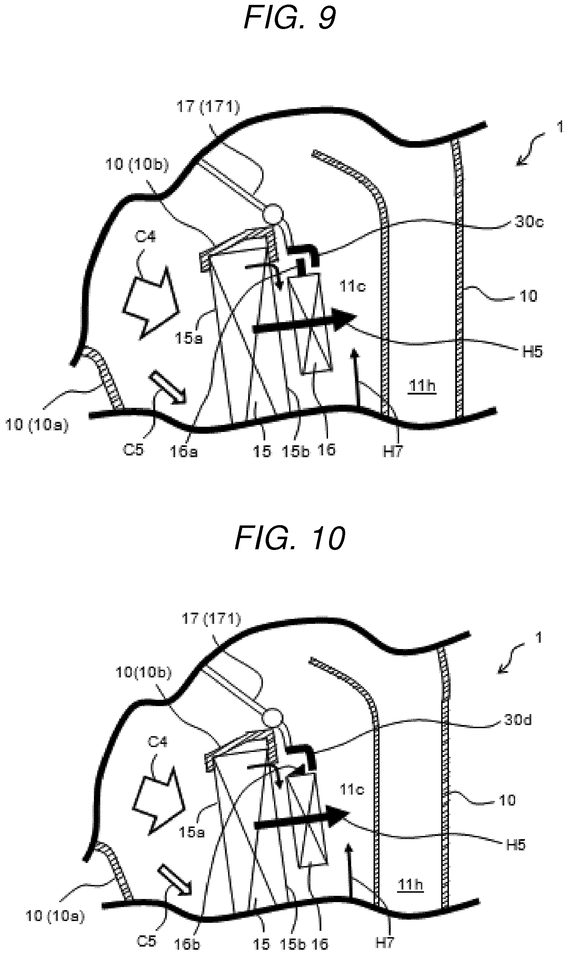

Fig. 9 illustrates a part of a cross section of a vehicle air-conditioning apparatus of a first embodiment of the invention in the full hot mode. Fig. 9 illustrates a mode in which an opening-and-closing portion 30c cooperates with a projecting portion 16a projecting from the auxiliary heater 16 to form a labyrinth structure while keeping a clearance with respect to the auxiliary heater 16. The ventilation resistance of the S1 (controlled area) located above the auxiliary heater 16 may further be increased, so that the flow of the cold air C4 may be concentrated on the heat exchanger 15 for heating and the auxiliary heater 16.

### Second Embodiment

Fig. 10 illustrates a part of a cross section of a vehicle air-conditioning apparatus of a second embodiment of the invention in the full hot mode. Fig. 10 illustrates a mode in which an opening-and-closing portion 30d cooperates with a projecting portion 16b projecting from the auxiliary heater 16 to form a labyrinth structure while keeping a clearance with respect to the auxiliary heater 16. The ventilation resistance of the S1 (controlled area) located above the auxiliary heater 16 may further be increased, so that the flow of the cold air C4 may be concentrated on the heat exchanger 15 for heating and the auxiliary heater 16. Since the projecting portion 16b projects gradually at an inclination with respect to the direction of the flow of hot air passing through the controlled area S1, an increase in ventilation resistance in the air mix mode may be restrained.

### Fourth example

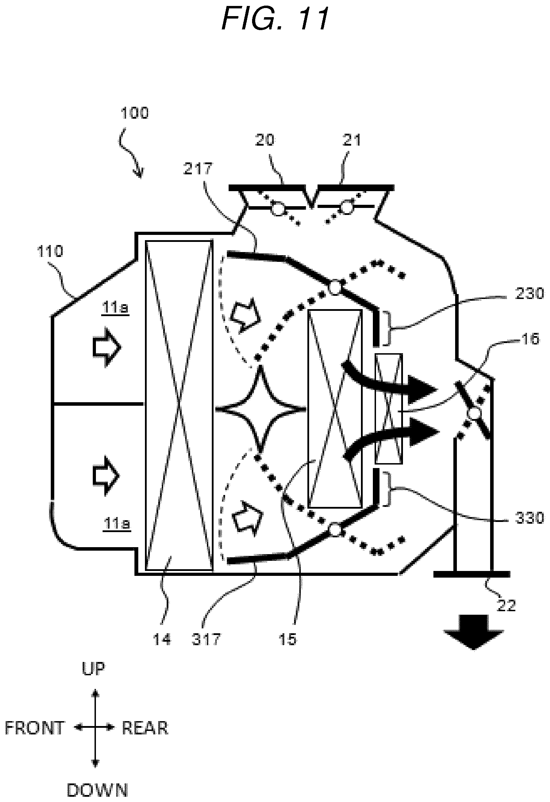

The first embodiment to the second embodiment have been described thus far, and the vehicle air-conditioning apparatuses in which the invention is implemented have been described. However, the invention is not limited to these two embodiments. Fig. 11 illustrates a case where the vehicle air-conditioning apparatus 100 has a known upper and lower two layered flow system. The vehicle air-conditioning apparatus 100 includes an air mix damper 217 disposed above the heat exchanger 15 for heating in the interior of a casing 110 and an air mix damper 317 disposed below the heat exchanger 15 for heating, and the air mix dampers 217 and 317 have opening-and-closing portions 230 and 330, respectively. In the full hot mode, an area of the outflow surface 15b of the heat exchanger 15 for heating in which the auxiliary heater 16 is not disposed (does not cover) is closed by using the opening-and-closing portion 230 and the opening-and-closing portion 330, so that the airflow may be concentrated on the auxiliary heater 16.

In the forth example, a configuration in which only one of the opening-and-closing portion 230 and the opening-and-closing portion 330 (for example, a configuration in which only the opening-and-closing portion 330 is provided) may be employed. The configuration may be selected as needed on the basis of an effect of restraining the increase in ventilation resistance and an effect of improvement of the heating performance.

### Other Embodiments

The example in which the opening-and-closing portions 30, 230, and 330 are formed integrally with the air mix dampers 17, 217, and 317 has been described. However, the invention is not limited thereto. For example, although illustration is omitted, a configuration in which a movable opening-and-closing portion 430 which is interlocked with the air mix damper is provided in addition to the air mix dampers 17, 217, and 317 to close the controlled area S1 in the full hot mode is also applicable. In an example illustrated in Fig. 11, a driving structure of the opening-and-closing portion 430 has a structure in which a damper portion of the air mix damper 317 provided with the illustrated opening-and-closing portion 330 is omitted. The number of components is increased in comparison with the case where the air mix damper and the closing member are formed integrally, while flexibility in design of the air-conditioning apparatus may be improved by reducing the size of the air mix damper.

In addition, not only the configuration in which the controlled area S1 is provided above the auxiliary heater 16, but also a configuration in which the controlled area S1 is provided on the right side or the left side of the auxiliary heater 16 may be employed depending on the layout of each air-conditioning apparatus.

The vehicle air-conditioning apparatus of the invention may be manufactured industrially, and may be an object for commercial dealings. Therefore, the vehicle air-conditioning apparatus is the invention having an economical value and being industrially applicable.

### Reference Signs List

1 vehicle air-conditioning apparatus
10 casing
10a wall portion
11 air flow channel
12 outside air introduction port
13 blower
14 heat exchanger for cooling
15 heat exchanger for heating
15a inflow surface of heat exchanger for heating
15b outflow surface of heat exchanger for heating
16 auxiliary heater
17 air mix damper
17a rotating shaft of air mix damper
18 foot damper
18a rotating shaft of foot damper
19 DEF-VENT switching damper
19a rotating shaft of DEF-VENT switching damper
20 DEF blowout port
21 VENT blowout port
22 FOOT blowout port
30 opening-and-closing portion
100 vehicle air-conditioning apparatus
110 casing
C1 to C6 cold air
M1 to M3 conditioned air
H1 to H7 hot air
S area of outflow surface of heat exchanger for heating where auxiliary heater is not disposed
S1 controlled area
S2 area of outflow surface of heat exchanger for heating where auxiliary heater is not disposed and which is not controlled area
P1, P2 pipe
D1, D2 hot water distribution tank
T tube
K electric wiring

## Claims

1. A vehicle air-conditioning apparatus (1) comprising:
a casing (10) having an air flow channel in the interior thereof;
a heat exchanger for heating (15) that heats air flowing in the air flow channel;
an auxiliary heater (16) that is smaller than the heat exchanger for heating (15) and is disposed to face an outflow surface (15b) of the heat exchanger for heating (15) from which the heated air flows out; and
an opening-and-closing portion (30c, 30d) that is capable of opening and closing a controlled area (S1) of the outflow surface (15b) which is a part of an area where the auxiliary heater (16) is not disposed,
the opening-and-closing portion (30c, 30d) closing the controlled area (S1) in a full hot mode, and opens the controlled area (S1) in a mode other than the full hot mode **characterized in that** the auxiliary heater (16) and the opening-and-closing portion (30c, 30d) form a labyrinth structure with respect to the air flowing out from the outflow surface (15b) when in the full hot mode.

2. The vehicle air-conditioning apparatus (1) according to Claim 1, comprising:
a heat exchanger for cooling (14) disposed on an upstream side of the heat exchanger for heating (15); and
a wall portion (10a) extending upward from a lower surface of the air flow channel between the heat exchanger for cooling (14) and the heat exchanger for heating (15) and biasing the air flow flowed out from the heat exchanger for cooling (14) into a main flow having a relatively large volume of air flow and a branch flow having a relatively small volume of air flow,
wherein the auxiliary heater (16) and the controlled area (S1) are disposed in a space where the main flow passes.

3. The vehicle air-conditioning apparatus (1) according to Claim 1 or 2, comprising:
an air mix damper (17) that regulates a ratio between air that proceeds to the heat exchanger for heating (15) and air that bypasses the heat exchanger for heating (15), wherein
the opening-and-closing portion (30c, 30d) is formed integrally with the air mix damper (17).

4. The vehicle air-conditioning apparatus (1) according to any one of Claims 1 to 3, wherein
the auxiliary heater (16) is an electric heating heater, and the electric heating heater and the opening-and-closing portion (30c, 30d) do not come into contact with each other.

## Patentansprüche

1. Fahrzeugklimatisierungsvorrichtung (1), Folgendes umfassend:
ein Gehäuse (10), das in seinem Inneren einen Luftströmungskanal aufweist;
einen Wärmetauscher zum Heizen (15), der die durch den Luftströmungskanal strömende Luft heizt;
einen Zusatzheizer (16), der kleiner als der Wärmetauscher zum Heizen (15) ist und dazu angeordnet ist, einer Ausströmungsfläche (15b) des Wärmetauschers zum Heizen (15), von der die erhitzte Luft ausströmt, zugewandt zu sein; und
einen Öffnungs- und Schließabschnitt (30c, 30d), der einen kontrollierten Bereich (S1) der Ausströmungsfläche (15b), der Teil eines Bereichs ist, auf dem der Zusatzheizer (16) nicht angeordnet ist, öffnen und schließen kann,
wobei der Öffnungs- und Schließabschnitt (30c, 30d) den kontrollierten Bereich (S1) im vollständig heißen Modus schließt und den kontrollierten Bereich (S1) in einem anderen als dem vollständig heißen Modus öffnet,
**dadurch gekennzeichnet, dass** der Zusatzheizer (16) und der Öffnungs- und Schließabschnitt (30c, 30d) im vollständig heißen Modus in Bezug zur aus der Ausströmungsfläche (15b) ausströmenden Luft eine Labyrinthstruktur ausbilden.

2. Fahrzeugklimatisierungsvorrichtung (1) nach Anspruch 1, Folgendes umfassend:
einen Wärmetauscher zum Kühlen (14), der auf einer dem Wärmetauscher zum Heizen (15) vorgelagerten Seite angeordnet ist; und
einen Wandabschnitt (10a), der sich von einer unteren Fläche des Luftströmungskanals zwischen dem Wärmetauscher zum Kühlen (14) und dem Wärmetauscher zum Heizen (15) nach oben erstreckt und den aus dem Wärmetauscher zum Kühlen (14) ausströmenden Luftstrom in einen Hauptstrom, der ein relativ großes Luftstromvolumen aufweist, und einen Zweigstrom, der ein relativ kleines Luftstromvolumen aufweist, vorspannt,
wobei der Zusatzheizer (16) und der kontrollierte Bereich (S1) in einem Raum angeordnet sind, in dem der Hauptstrom fließt.

3. Fahrzeugklimatisierungsvorrichtung (1) nach Anspruch 1 oder 2, Folgendes umfassend:
eine Luftmischklappe (17), die ein Verhältnis zwischen Luft, die zum Wärmetauscher zum Heizen (15) strömt, und Luft, die am Wärmetauscher zum Heizen (15) vorbeiströmt, reguliert, wobei der Öffnungs- und Schließabschnitt (30c, 30d) mit der Luftmischklappe (17) einstückig ausgebildet ist.

4. Fahrzeugklimatisierungsvorrichtung (1) nach einem der Ansprüche 1 bis 3, wobei der Zusatzheizer (16) ein elektrisch heizender Heizer ist und der elektrisch heizende Heizer und der Öffnungs- und Schließabschnitt (30c, 30d) einander nicht berühren.

## Revendications

1. Appareil de climatisation de véhicule (1) comprenant :
un boîtier (10) comportant un canal de circulation d'air à l'intérieur ;
un échangeur de chaleur servant à chauffer (15) qui chauffe l'air circulant dans le canal de circulation d'air ;
un dispositif de chauffage auxiliaire (16) qui est plus petit que l'échangeur de chaleur servant à chauffer (15) et est disposé en face d'une surface de sortie (15b) de l'échangeur de chaleur servant à chauffer (15) depuis laquelle l'air chauffé sort ; et
une partie d'ouverture et de fermeture (30c, 30d) qui peut ouvrir et fermer une zone contrôlée (S1) de la surface de sortie (15b) qui fait partie d'une zone dans laquelle le dispositif de chauffage auxiliaire (16) n'est pas disposé, la partie d'ouverture et de fermeture (30c, 30d) fermant la zone contrôlée (S1) dans un mode pleine chaleur et ouvrant la zone contrôlée (S1) dans un mode autre que le mode pleine chaleur,
**caractérisé en ce que** le dispositif de chauffage auxiliaire (16) et la partie d'ouverture et de fermeture (30c, 30d) forment une structure en labyrinthe par rapport à l'air sortant de la surface de sortie (15b) en mode pleine chaleur.

2. Appareil de climatisation de véhicule (1) selon la revendication 1, comprenant :
un échangeur de chaleur servant à refroidir (14) disposé sur un côté amont de l'échangeur de chaleur servant à chauffer (15) ; et
une partie de paroi (10a) s'étendant vers le haut depuis une surface inférieure du canal de circulation d'air entre l'échangeur de chaleur servant à refroidir (14) et l'échangeur de chaleur servant à chauffer (15) et orientant le flux d'air sorti de l'échangeur de chaleur servant à refroidir (14) dans un flux principal présentant un volume relativement grand de flux d'air et un flux dérivé présentant un volume relativement petit de flux d'air,
dans lequel le dispositif de chauffage auxiliaire (16) et la zone contrôlée (S1) sont disposés dans un espace où passe le flux d'air principal.

3. Appareil de climatisation de véhicule (1) selon la revendication 1 ou 2, comprenant :
un clapet de mélange d'air (17) qui règle un rapport entre l'air qui se dirige vers l'échangeur de chaleur servant à chauffer (15) et l'air qui contourne l'échangeur de chaleur servant à chauffer (15), dans lequel
la partie d'ouverture et de fermeture (30c, 30d) est formée d'un seul tenant avec le clapet de mélange d'air (17).

4. Appareil de climatisation de véhicule (1) selon l'une quelconque des revendications 1 à 3, dans lequel
le dispositif de chauffage auxiliaire (16) est un dispositif de chauffage électrique, et le dispositif de chauffage électrique et la partie d'ouverture et de fermeture (30c, 30d) n'entrent pas en contact l'un avec l'autre.
